# EUROPEAN PATENT APPLICATION

(11) **EP 4 794 163 A1**
(43) Date of publication of application: **19.08.2026**
(21) Application number: 25158442.1
(22) Date of filing: 17.02.2025
(51) Int. Cl.: H02J 7/00, H01R 13/22, H01R 13/62

(54) **CHARGER FOR A TELEMEDICAL WEARABLE DEVICE**

(71) Applicant: Sidly Sp. z o.o., 00-020 Warszawa (PL)
(72) Inventor: PIZON, Michal, 26-411 Rusinów (PL); KOCYK, Edyta, 26-902 Grabów nad Pilica (PL); MUSIAL, Marcin Konrad, 00-138 Warszawa (PL); KRYSINSKI, Pawel, 01-046 Warszawa (PL); SUCHECKI, Emilian, 05-480 Karczew (PL)
(74) Representative: Adamczyk, Piotr

(57) **Abstract**

A charger (1) has a housing (5) provided with a recess (6) for accommodating the surface of a device (2) that contacts the patient's body. The recess (6) of the housing (5) includes a flat central portion (7) with an elongated, centrally symmetric positioning cavity (8) having a longitudinal axis of symmetry (10) and a center of symmetry (11). On the flat area (7) of the recess (6) surrounding the positioning cavity (8), there are a first (22), second (23), third (24), and fourth (25) compliant pin contact, which cooperate with the contact fields (26) of the device (2) being charged, as well as at least one pair of permanent magnets (12, 13, 14, 15). One magnet (12, 13) of a given pair (12-14, 13-15) is located on the opposite side of the axis of symmetry (10) from the other magnet (14, 15) of that pair. The magnets are arranged in central symmetry relative to the center of symmetry (11) of the positioning cavity (8). The first (22) and second (23) pin contacts lie on a straight line (16) parallel to the axis of symmetry (10) and passing through one magnet (12, 13) of the pair, while the third (24) and fourth (25) pin contacts are arranged in central symmetry relative to the first (22) and second (23) pin contacts with respect to the center of symmetry (11) of the positioning cavity (8). These third (24) and fourth (25) pin contacts lie on another straight line (17), likewise parallel to the axis of symmetry (10), passing through the other magnet (14, 15) of the pair.

## Description

The present invention relates to a charger for a telemedical wearable device intended for use by persons with disabilities, elderly individuals, and patients of medical care facilities, in both clinical and non-clinical settings, for monitoring selected vital signs in such users.

Wearable electronic devices, such as smartwatches and so-called medical bands, commonly measure vital parameters including heart rate, body temperature, or blood oxygen level. These devices typically have non-removable, battery-powered supplies requiring periodic recharging. In most cases, devices of this type include a commonly known charging socket for small electronic devices, for example the widely used USB Type-C connector. Publication US10756554B2 discloses a charging solution for wearable devices in which conductive magnets are utilized to provide both electrical and mechanical connection of the charger cable to the device being charged. Publication EP2770586B1 discloses a power connector in which magnets press two connector halves together, while the electrical contact is provided by known cooperation between flat contact areas and compliant pin contacts. The solution closest to the subject matter of the invention is the charger for a wristwatch disclosed in publication US2019165516A1. This charger has a housing with a recess shaped to match the lower surface of the watch case being charged i.e., the surface that contacts the user's wrist. Within this recess are four compliant pin contacts facing upward, toward the watch being charged, and two permanent magnets oriented with one of their poles also facing upward. The pin contacts, which protrude from the bottom of the recess, cooperate with contact fields on the lower surface of the watch case. The boundary of the charger's recess includes two protrusions forcing the watch case into one specific position within the charger recess, thereby ensuring that the watch remains in electrical contact with the charger's pin contacts. Inside the watch case are two permanent magnets similar to those of the charger. The watch's magnets are positioned opposite the charger's magnets, but oriented so their poles face downward with the pole opposite to the upward-facing pole of the charger's respective magnet. The use of the aforementioned magnets prevents accidental detachment of the watch from the charger and ensures proper electrical contact between the power source and the watch battery.

The aim of the invention is to provide a charger that is easy to use, even by persons with disabilities.

A charger according to the invention comprises a housing with a recess shaped to match the housing surface of the device being charged that contacts the patient's body. Located within the recess of the charger housing are a first, second, third, and fourth compliant pin contact, which cooperate with the contact fields of the device being charged. Also located in this recess are at least two permanent magnets, oriented with one of their poles toward the device to be loaded and interacting with the opposite poles of the device's permanent magnets. The invention consists in that the recess of the charger housing has a flat central portion containing an elongated positioning cavity of centrally symmetric shape, which has a longitudinal axis of symmetry passing through the center of symmetry of this cavity. Within the recess of the charger housing, in the flat area surrounding the positioning cavity, there is at least one pair of permanent magnets. One magnet of this pair is located on the opposite side of the axis of symmetry from the other magnet in that pair, and the magnets in the pair are positioned in central symmetry with respect to the center of symmetry of the positioning cavity. The first and second pin contacts are located on a straight line parallel to the axis of symmetry and passing through one magnet of the pair, while the third and fourth pin contacts are arranged in central symmetry to the first and second pin contacts with respect to the center of symmetry of the positioning cavity, along another straight line parallel to the axis of symmetry and passing through the other magnet of the pair.

In one variant of the invention, the charger includes two pairs of permanent magnets. The arrangement of these magnets and the pin contacts defines a rectangle whose shorter sides are parallel to the axis of symmetry, and whose diagonals intersect at the center of symmetry of the positioning cavity. The permanent magnets are located at the corners of this rectangle, with the magnets of one pair occupying those corners connected by one diagonal of the rectangle. The first and second pin contacts are located on one shorter side of the rectangle, while the third and fourth pin contacts are located on the other shorter side of the rectangle.

In another variant of the invention, the length of the shorter side of the rectangle is within the range from 65% to 95% of the length of the rectangle's longer side, and advantageously is 73.50% of the longer side's length.

In yet another variant of the invention, the distance between the pin contacts located on one side of the rectangle is from 20% to 45% of that side's length, and advantageously is 38.1% of that length.

In still another variant of the invention, the permanent magnets located at the corners joined by one diagonal of the rectangle are oriented outward with poles opposite to those of the permanent magnets located at the corners joined by the other diagonal of the rectangle.

The invention significantly simplifies the charging process for a telemedical wearable device, particularly for users with limited mobility. The two equivalent positions of the charged device within the charger allow the user to select whichever orientation provides a convenient view of the device's display. This is particularly important if the telemetric device lies flat, which would make it impossible for position sensors to determine the proper orientation of the displayed content.

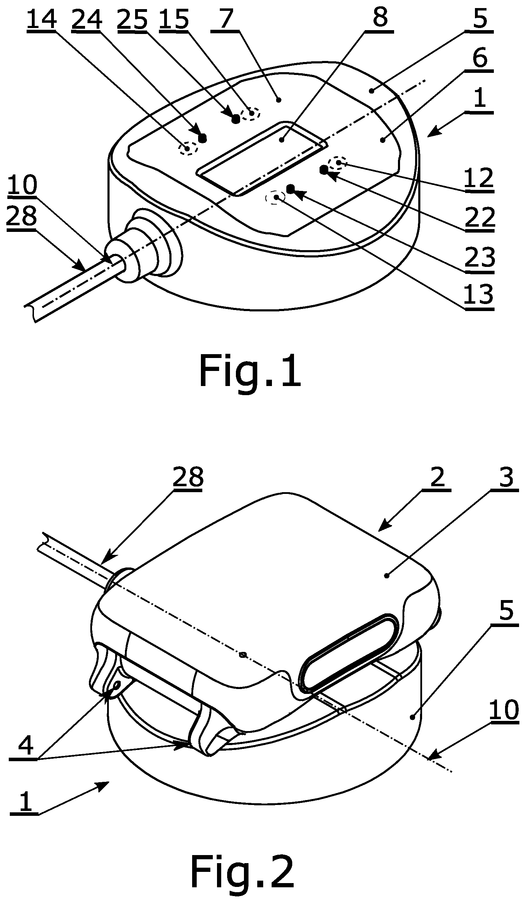

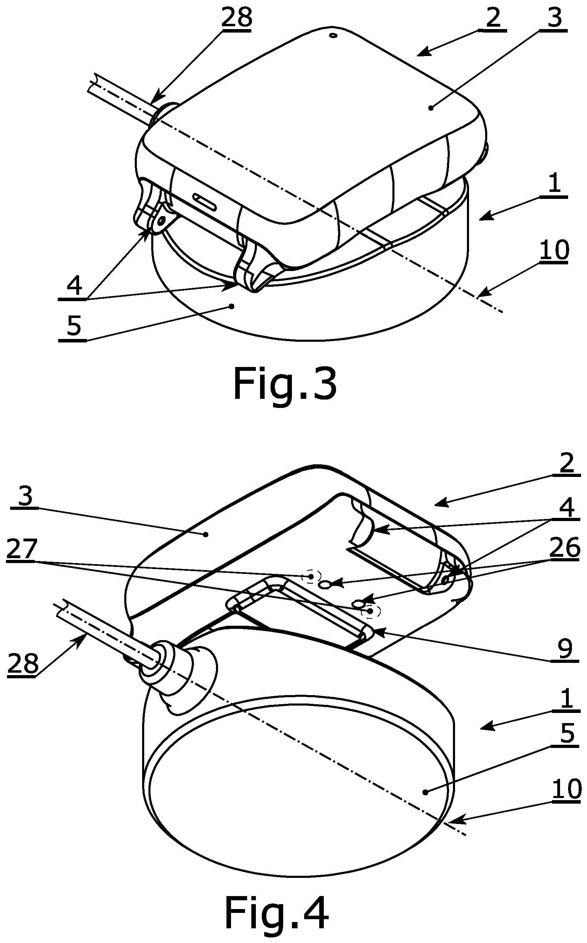

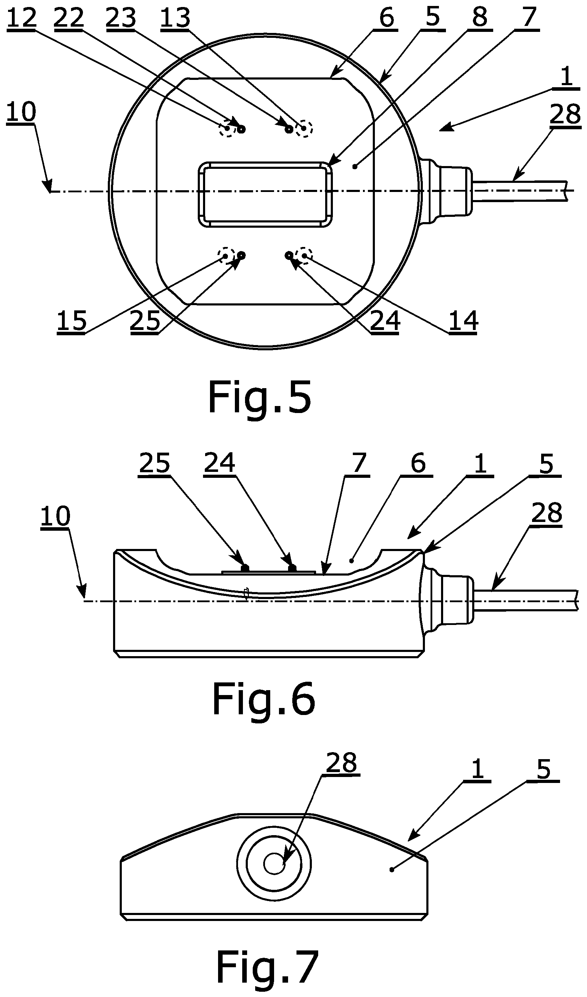

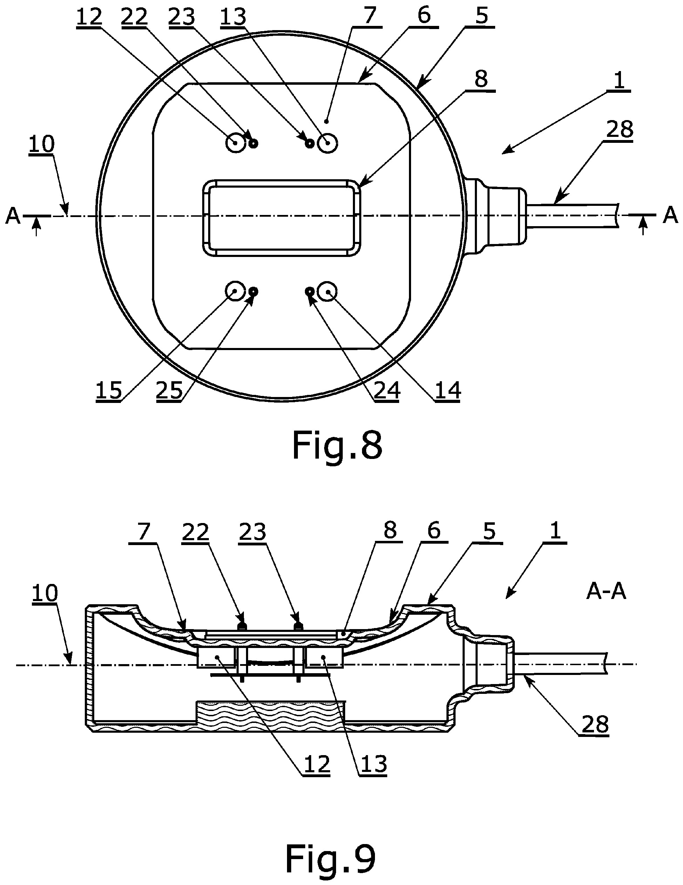

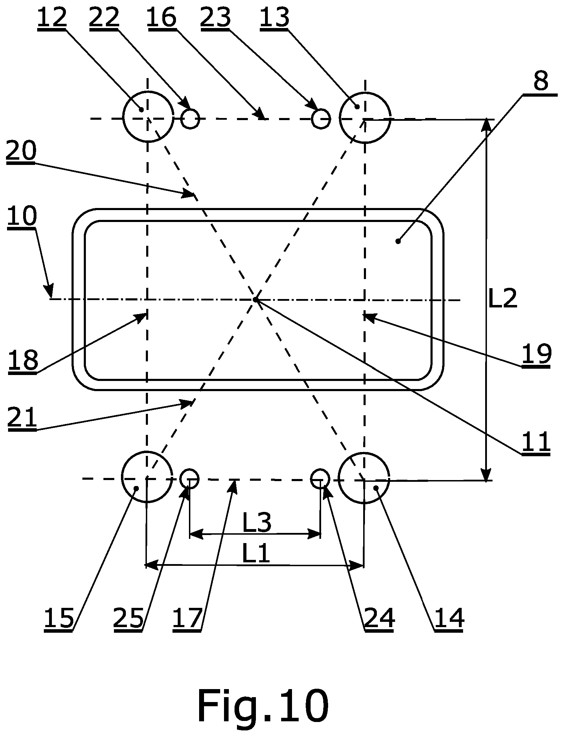

The invention is depicted in an exemplary embodiment in the accompanying drawings, wherein Fig.1 shows an axonometric view of the charger according to the invention, whereas Fig.2 shows another axonometric view of the same charger, with the telemedical device to be charged placed on it. Fig.3 shows the charger of Fig.2 with the device rotated by 180 degrees relative to the position in Fig.2. Fig.4 shows another axonometric view of the charger while the device is being placed on it. Fig.5, Fig.6, and Fig.7 show the charger of Fig.1 in a top view, in a side view along the axis of symmetry, and in a side view perpendicular to the axis of symmetry, respectively. Fig.8 is an enlarged view of Fig.5, and Fig.9 is a cross-sectional view of the charger of Fig.1 along the plane indicated in Fig.8. Fig.10 shows a schematic arrangement of the magnets and pin contacts in the recess of the charger housing.

An exemplary embodiment of the invention concerns a charger 1 for a wearable device 2 designed for remote body-temperature measurement, the construction of which is disclosed in publication EP4052640B1. The device 2 is attached to the patient's wrist by means of a known, non-illustrated strap similar to that of a typical wristwatch. The device 2 has a housing 3, similar to a watch case, fitted with well-known strap lugs 4. The charger 1 has a housing 5 in the form of a low cylinder about 50 mm in diameter and about 18 mm high. Since in the vast majority of cases such a charger rests on a flat, horizontal surface (e.g., a tabletop or a nightstand) during operation, for the purpose of describing this exemplary embodiment, the axis of the cylindrical housing 5 is assumed to be vertical, defining the vertical direction for all elements of the charger. Consequently, the base of the cylindrical housing 5 resting on the table is considered its lower base, while the other base of the cylinder, which supports device 2 during charging, is considered its upper base. By analogy, the surface of the device housing 3 that contacts both the user's wrist and the charger 1 is its lower surface. In the upper base of charger housing 5 there is a recess 6 shaped to match the lower surface of housing 3. The Recess 6 has a flat central portion 7, in which there is an elongated positioning cavity 8 shaped as a rectangle with rounded corners, corresponding in shape to a positioning protrusion 9 on the lower surface of the housing 3 of the device 2. The cavity 8 has a longitudinal axis of symmetry 10, running parallel to its longer sides and passing through its center of symmetry 11. Arranged on the flat region 7 surrounding the positioning cavity 8 are four cylindrical permanent magnets 12, 13, 14 and 15, each having a vertical axis. Each magnet is 3.5 mm in diameter, 4 mm high, and has a magnetic moment of 0.5 A/m². Such magnets have a north (N) pole on one circular face and a south (S) pole on the other. The axes of the magnets 12, 13, 14 and 15 lie at the corners of a rectangle inscribed in the recess 6. This rectangle comprises a first 16 and second 17 shorter side, and a first 18 and second 19 longer side. The shorter sides 16 and 17 have a length L1 of 16.64 mm, while the longer sides 18 and 19 have a length L2 of 20 mm. The shorter sides 16 and 17 lie in the flat area 7 of the recess 6 and are parallel to the axis of symmetry 10 of the cavity 8. Consequently, the intersection of the first diagonal 20 and the second diagonal 21 of this rectangle coincides with the center of symmetry 11 of positioning the cavity 8. The mentioned permanent magnets (12-15) form two pairs. The first pair consists of the first magnet 12 and the second magnet 14, both oriented upward with their "S" poles facing upward, located at the two corners of the rectangle joined by its first diagonal 20. The second pair of magnets consists of the third magnet 13 and the fourth magnet 15, located at the remaining two corners of the rectangle, joined by its second diagonal 21. Between magnets 12-15 in the recess 6 are four compliant pin contacts 22-25. These contacts cooperate with two contact fields 26 on the lower surface of the device housing 3 when the device 2 rests in the charger 1. Proper contact between pin contacts 22-25 and the contact fields 26 is ensured by two permanent magnets 27, having parameters analogous to magnets 12-15. These magnets 27 are positioned in alignment with contact fields 26 inside the lower part of the device housing 3, oriented toward magnets (12-15) in the charger with opposite poles (N-S and S-N). This six-magnet arrangement - four of which attract one another at any given time - causes the housing 3 of the device 2 to fit securely against the charger 1. The pin contacts 22, 23, 24 and 25 protrude vertically about one millimetre above the flat region 7 and include resilient elements (not shown) that provide vertical compliance, ensuring reliable electrical contact with the contact fields 26. The first 22 and second 23 pin contacts are located on the first shorter side 16 of the rectangle, between the first magnet 12 and the third magnet 13, while the third 24 and fourth 25 pin contacts are located on the second shorter side 17 of the rectangle, between the second magnet 14 and the fourth magnet 15. The pin contacts 22, 23, 24, and 25 are symmetrically arranged about the center of symmetry 11. The distance L3 between the two pin contacts on one shorter side of the rectangle is 7.62 mm. The charger 1 is powered by a known cable 28 fitted with a USB-type connector (not shown in the figures).

### List of designations

1 - charger,
2 - wearable device,
3 - housing of device 2,
4 - strap lugs,
5 - housing of charger 1,
6 - recess in housing 5,
7 - flat central portion of recess 6,
8 - positioning cavity in recess 6,
9 - positioning protrusion of device 2,
10 - axis of symmetry of cavity 8,
11 - center of symmetry of cavity 8,
12 - first permanent magnet
13 - second permanent magnet,
14 - third permanent magnet,
15 - fourth permanent magnet,
16 - first shorter side of rectangle,
17 - second shorter side of rectangle,
18 - first longer side of rectangle,
19 - second longer side of rectangle,
20 - first diagonal of the rectangle,
21 - second diagonal of the rectangle,
22 - first pin contact,
23 - second pin contact,
24 - third pin contact,
25 - fourth pin contact,
26 - contact field of device 2,
27 - permanent magnet of device 2,
27 - power cable.

## Claims

1. A charger for a telemedical wearable device, comprising a housing (5) with a recess (6) shaped to match a housing surface (3) of the device (2) being charged, which surface is in contact with the patient's body, wherein said recess (6) accommodates a first, second, third, and fourth compliant pin contact cooperating with contact fields of the device (2) being charged, and at least two permanent magnets oriented with one of their poles toward the device (2) being charged and cooperating with the opposite poles of the permanent magnets of the device (2), **characterized in that** the recess (6) of the charger housing (5) includes a flat central portion (7) in which there is an elongated positioning cavity (8) of centrally symmetric shape, having a longitudinal axis of symmetry (10) passing through the center of symmetry (11) of the cavity (8), and **in that** at least one pair of permanent magnets (12, 13, 14, 15) is positioned on the flat region (7) surrounding the positioning cavity (8), one of the magnets (12, 13) of a given pair (12-14, 13-15) is located on the opposite side of the axis of symmetry (10) relative to the other magnet (14, 15) of that pair, wherein the magnets of this pair are arranged in central symmetry with respect to the center of symmetry (11) of the positioning cavity (8), the first (22) and second (23) pin contacts are arranged on a straight line (16) parallel to the axis of symmetry (10) and passing through one of the magnets (12, 13) of given pair, while the third (24) and fourth (25) pin contacts are arranged in central symmetry relative to the first (22) and second (23) pin contacts with respect to the center of symmetry (11) of the positioning cavity (8) and they are located on a straight line (17) parallel to the axis of symmetry (10) and passing through the other magnet (14, 15) of given pair.

2. The charger according to claim 1, **characterized in that** it includes two pairs of permanent magnets (12, 13, 14, 15), such that the arrangement of these magnets and the pin contacts (22, 23, 24, 25) defines a rectangle whose shorter sides (16, 17) are parallel to the axis of symmetry (10), and the intersection point of the diagonals (20, 21) of this rectangle coincides with the center of symmetry (11) of the positioning cavity (8), the permanent magnets (12, 13, 14, 15) are located at the corners of this rectangle, whereby the magnets of one pair (12, 14) occupy the corners connected by one diagonal (20) of the rectangle, wheras the first (22) and second (23) pin contacts are disposed on the first shorter side (16) of the rectangle, while the third (24) and fourth (25) pin contacts are disposed on the second shorter side (17) of the rectangle.

3. The charger according to claim 2, **characterized in that,** the length (L1) of the shorter side (16, 17) of the rectangle is from 65% to 95% of the length (L2) of the longer side (18, 19) of the rectangle, and advantageously is 73.50% of the length (L2) of the longer side (18, 19).

4. The charger according to claim 3, **characterized in that,** the distance (L2) between the pin contacts (22-23, 24-25) located on one side (16, 17) of the rectangle is from 20% to 45% of the length (L1) of that side (16, 17), and advantageously is 38.1% of said length (L1).

5. The charger according to claim 2 or 3 or 4, **characterized in that,** the permanent magnets (12, 14) located at the corners connected by one diagonal (20) of the rectangle are oriented outward with opposite poles compared to the permanent magnets (13, 15) located at the corners connected by the other diagonal (21) of the rectangle.
